# EUROPÄISCHE PATENTSCHRIFT

(11) **EP 1 797 382 B1**
(45) Veröffentlichungstag und Bekanntmachung des Hinweises auf die Patenterteilung: **11.11.2009**
(21) Anmeldenummer: 05791055.6
(22) Anmeldetag: 26.09.2005
(51) Int. Cl.: F25D 31/00, F25D 3/00, B67D 1/08, F28D 20/02, C09K 5/06

(54) **VORRICHTUNG ZUM KÜHLEN VON LEBENSMITTELN**
APPARATUS FOR COOLING FOOD
DISPOSITIF DE REFROIDISSEMENT DE PRODUITS ALIMENTAIRES

(30) Priorität: 27.09.2004 DE 102004046794; 31.03.2005 DE 102005014742
(43) Veröffentlichungstag der Anmeldung: 20.06.2007
(73) Patentinhaber: SGL Carbon SE, 65203 Wiesbaden (DE)
(72) Erfinder: SONNENREIN, Gerrit, 33129 Delbrück (DE)
(86) Internationale Anmeldenummer: PCT/EP2005/010379
(87) Internationale Veröffentlichungsnummer: WO 2006/034829

(56) Entgegenhaltungen:
- EP-A- 0 777 090
- EP-A- 1 156 097
- EP-A- 1 416 027
- DE-A1- 19 630 073
- US-A- 6 105 659

## Beschreibung

Die Erfindung bezieht sich auf eine Vorrichtung zum Kühlen von Lebensmitteln, insbesondere von Getränken auf Wasserbasis, der im Oberbegriff von Anspruch 1 erläuterten Art.

Eine derartige Vorrichtung ist aus der DE 198 55 214 bekannt. In einem Ausführungsbeispiel der bekannten Vorrichtung ist ein Kältespeicher in Gestalt einer Eisbank vorgesehen, die über ein Kühlmittel durch die kalte Seite einer Peltier-Plattenbaugruppe gekühlt wird. Das zu kühlende Getränk wird um oder durch die Eisbank geführt. Die thermische Leitfähigkeit des Eiswassers und somit die Wärmeübertragungseigenschaft der Eisbank kann verbessert werden, indem ein guter Leiter, wie beispielsweise Kupferwolle oder Kupferstücke, in dessen Rauminhalt verteilt wird. Die Kühlung von Lebensmitteln bzw. Getränken durch Eis ist gängige Praxis, hat jedoch entscheidende Nachteile. Ein Hauptnachteil besteht in der geringen Wärmeleitfähigkeit von Eis, Die Zumischung von Kupfermaterial ist einerseits teuer und birgt andererseits die Gefahr, dass sich beispielsweise Kupferstücke schwerkraftbedingt und beim teilweisen Abschmelzen der Eisbank im unteren Bereich ansammeln und im oberen Bereich verarmen. Ein weiterer Nachteil von Eis, der jedoch bisher immer in Kauf genommen wurde, ist die ungünstige Phasenwechseltemperatur von Eis zu Wasser, wobei bisher immer die Gefahr bestand, und durch aufwendige Steuertechnik vermieden werden musste, dass auch Getränke auf Wasserbasis gefroren. Zwar wird in dieser Druckschrift auch die Verwendung eines eutektischen Salzes oder eines Blocks aus Aluminium als Kältespeicher erwähnt, die spezielle Auswahl des eutektischen Salzes, insbesondere gemäß seiner Phasenwechseltemperatur fest-flüssig wird jedoch nicht beschrieben.

Für industrielle Anwendungen als Rohr- oder Plattenwärmetauscher ist aus der EP 914 399 B1 ein Verbundmaterial bekannt, bei dem gepresster expandierter Graphit mit einem Phasenwechselmaterial getränkt ist. Der Graphit wirkt als Wärmeleiter, der außerdem in der Lage ist, die unterschiedlichsten Phasenwechselmaterialien aufzunehmen. Als Phasenwechselmaterial kann Paraffin, wird jedoch bevorzugt ebenfalls Wasser/Eis eingesetzt.

In industriellen und gewerblichen Anmeldungen wird im allgemeinen auf Kompressions- bzw. Absorptionskälteanlagen zurückgegriffen, deren relativ großen Abmessungen sowie hohen Herstellungskosten einer Nutzung im Haushaltsbereich jedoch entgegenstehen. Aus diesem Grund bieten sich für die Bereitstellung von gekühltem Trinkwasser im unteren Preissegment, insbesondere im Bereich der Haushaltskleingeräte, Peltier-Elemente an, bei denen sich durch Anlegen eines elektrischen Feldes an zwei verschiedene elektrische Leiter die eine Seite erwärmt und die andere abkühlt.

Die periodische Bereitstellung von gekühltem Trinkwasser bei Anwendung im Haushaltsbereich machen aufgrund der geringen thermischen Leistungen von Peltier-Elementen eine effektive Kältespeicherung, z.B. während Nachtphasen, zum entscheidenden Kriterium für die Kapazität einer Peltier-Durchlaufkühlung.

Die einfachste Form einer solchen Kühlung wird z.B. in DE 299 10 820 offenbart, in der ein geschlossenes Wasserreservoir mittels Peltier-Elementen auf die gewünschte Temperatur heruntergekühlt wird und nachfließendes Wasser einen entsprechenden Anteil des gekühlten Wassers ersetzt. Da für die Kältespeicherung in diesem Fall lediglich die spezifische Wärmekapazität des Wassers im Reservoir zur Verfügung steht, sind bereits für geringe Kapazitäten große Volumina erforderlich.

US 5 544 489 offenbart diesbezüglich eine Kapazitätsverbesserung durch Ausnutzung der Schmelzenthalpie des zu kühlenden Wassers. Hierzu wird an der Kaltseite des Peltier-Elementes Eis innerhalb eines Wasserreservoirs erzeugt, wodurch die Energiedichte des Kältespeichers deutlich erhöht wird.

Beiden genannten Vorrichtungen steht jedoch die zu erwartende hohe Keimbelastung durch stehendes Wasser in einem Reservoir hinsichtlich einer trinkwasserrechtlichen Zulassung entgegen. Diesbezügliche Abhilfe schafft EP 0 777 090 mit dem wesentlichen Unterschied zu US 5 544 489, dass das zu kühlende Trinkwasser in einer Rohrwendel durch das eisgekühlte Reservoir geleitet und ein direkter Kontakt somit vermieden wird. Problematisch hinsichtlich der räumlichen Abmessungen einer solchen

Vorrichtung ist, dass der vom Eis ausgefüllte Raum nicht mehr für die Trinkwasserwendel zur Verfügung steht. Eine weitere Vorrichtung zum Kühlen gemäß dem Oberbegriff vom Anspruch 1 ist aus US 6 105 659 bekannt.

Grundsätzliches Problem aller bekannten Durchlaufkühlungen auf Peltier-Basis ist der geringe Wirkungsgrad von Peltier-Elementen, welcher vorwiegend durch die Temperaturdifferenz zwischen kalter und warmer Seite bestimmt wird. Während die warme Seite durch Einsatz entsprechender Kühlkörper und Lüfter grundsätzlich unproblematisch und technisch gelöst ist, stellt die kalte Seite ein bisher ungelöstes Problem dar. Aufgrund der niedrigen spezifischen Wärmeleitfähigkeit des eingesetzten Kältespeichermediums [λ_{wasser} ca. 0,57 W/(mK), λ_{Eis} ca. 2,2 W/(mK)] kommt es zu einer Erhöhung der Temperaturdifferenz und somit zu einer Verschlechterung des Wirkungsgrads.

Der vorliegenden Erfindung liegt die Aufgabe zugrunde, einen Vorrichtung zum Kühlen von Lebensmitteln, insbesondere von Getränken auf Wasserbasis, bereitzustellen, die einfach und kostengünstig herstellbar ist und eine hohe Kühlkapazität aufweist.

Die Aufgabe wird durch die im Anspruch 1 angegebenen Merkmale gelöst.

Durch die erfindungsgemäße Ausgestaltung wird erstmals eine Vorrichtung zum Kühlen von Lebensmitteln, insbesondere von Getränke auf Wasserbasis bereitgestellt, die eine hochwertige Lösung für Kleingeräte, insbesondere im Haushalt oder im Restaurant, darstellt. Mit dem erfindungsgemäß verwendeten Kältespeicher aus expandiertem Graphit und einem Phasenwechselmaterial, das seinen Fest-Flüssig-Phasenwechsel bei oder oberhalb von 273 K, d.h. der Gefriertemperatur von Wasser, bevorzugt wenige °C (bis 10° C) oberhalb des Gefrierpunktes von Wasser, durchläuft, wird ein sehr effektiver Kältespeicher bereitgestellt, der einerseits durch das Graphit eine gute Wärmeleitfähigkeit aufweist und somit für eine relativ rasche, schockartige Kühlung sorgt, und der andererseits ein Phasenwechselmaterial enthält, das auch ohne komplizierte Steuerungstechnik nicht die Gefahr birgt, dass Getränke auf Wasserbasis gefrieren und einen Eisblock bilden. Darüber hinaus wird einerseits die für eine gute Leistungsfähigkeit erforderliche Größe des Kältespeichers herabgesetzt und andererseits der Platz und die Kosten für eine umfangreiche Steuerung eingespart.

Beide Maßnahmen führen zu einer optimalen Anpassung der erfindungsgemäßen Vorrichtung an die Erfordernisse bei der Kühlung von Lebensmitteln, insbesondere von Getränken auf Wasserbasis.

Vorteilhafte Weiterbildungen sind den Unteransprüchen zu entnehmen.

Zum Abführen der vom Kältespeicher aufgenommenen Wärme ist bevorzugt ein Peltier-Element vorgesehen, das noch dazu den Vorteil hat, dass die durch die Leitung strömende Flüssigkeit zur Desinfektion durch Umpolung der Spannungsversorgung des Peltier-Elements erhitzbar ist. Peltier-Elemente sind sehr preiswert. Die vergleichsweise geringen thermischen Leistungen eines Peltier-Elements fallen durch das sehr effektive Speichermaterial mit expandiertem Graphit weniger ins Gewicht, insbesondere dann, wenn die Möglichkeit besteht, den Kältespeicher in Ruhezeiten der Vorrichtung, beispielsweise in der Nacht, "aufladen" zu können.

Statt eines Peltier-Elements kann jedoch auch die übliche Kühlschranktechnik, beispielsweise die Absorber- oder Kompressortechnik zum "Aufladen" des Kältespeichers eingesetzt werden. So ist es beispielsweise denkbar, den Kältespeicher in einen herkömmlichen Kühlschrank zu integrieren und dort entweder zur Aufrüstung des Kühlschranks für eine wirksame und effektive Schockkühlung, beispielsweise im Bereich des Gefrierfachs einzusetzen, oder dazu zu verwenden, im Zuge einer schockartigen Durchlaufkühlung Getränk, beispielsweise Wasser aus einer zentralen WasserVersorgung, im oder am Kühlschrank zu zapfen.

Grundsätzlich lässt sich die Erfindung jedoch auch immer dann vorteilhaft einsetzen, wenn mit geringen räumlichen Abmessungen kostengünstig eine hohe Kühlkapazität bei periodischer Belastung bzw. schwankendem Kühlleistungsbedarf bereitgestellt werden soll.

Damit das gesamte Behältnis für die trinkwasserführende Rohrgeometrie zur Verfügung steht, wird in der Erfindung ein Material als Kältespeichermedium eingesetzt, das am oder wenige °C über dem Gefrierpunkt von Wasser einen Phasenwechsel durchläuft, wofür sich grundsätzlich Salzhydrate, eutektische Mischungen sowie Paraffine eignen.

Zur Erhöhung des Wirkungsgrades des Peltier-Elementes wird das Kältespeichermedium mit expandiertem Graphit versetzt, wodurch die Wärmeleitfähigkeit bis zu einem Faktor von 150 erhöht werden kann.

Die Erfindung ist weiterhin für die Ausbildung eines Kühlbehälters geeignet, wobei der Kältespeicher in einer isolierten Wandung des Kühlbehälters oder in den Innenraum integrierbar ist, wobei der Innenraum durch den Kältespeicher auch vollständig ausgefüllt werden kann. Mit der erfindungsgemäßen Vorrichtung können so beispielsweise preisgünstig erhältliche, handelsübliche Kühlschränke umgerüstet werden.

Die Erfindung kann beispielsweise auch als Schockkühleinrichtung zum Ausgeben von Trinkwasser in einem Kühlbehältnis einsetzbar sein. Die Erfindung eignet sich auch besonders für Zapfeinrichtungen, wobei im Innenraum eines Gehäuses eine Getränkequelle, beispielsweise ein Bierfass, aufgenommen werden kann und der Kältespeicher sowohl im Innenraum als auch an der Zapfleitung wirksam ist.

Ausführungsbeispiele der Erfindung werden nachfolgend anhand der Zeichnungen näher beschrieben. Es zeigen:
- Fig. 1: eine schematische Darstellung eines ersten Ausführungsbeispiels einer erfindungsgemäßen Vorrichtung,
- Fig. 2: die Draufsicht auf Fig. 1,
- Fig. 3: eine schematische Darstellung eines weiteren Ausführungsbeispiels einer erfindungsgemäßen Vorrichtung,
- Fig. 4: die Darstellung des Schnitts A-A aus Fig. 3 für eine erste Anordnung der Leitung,
- Fig. 5: die Schnittdarstellung A-A aus Fig. 3 für eine zweite Anordnung der Lei- tung,
- Fig. 6: eine schematische Darstellung einer erfindungsgemäßen Vorrichtung unter Verwendung einer Kühlschranktechnik,

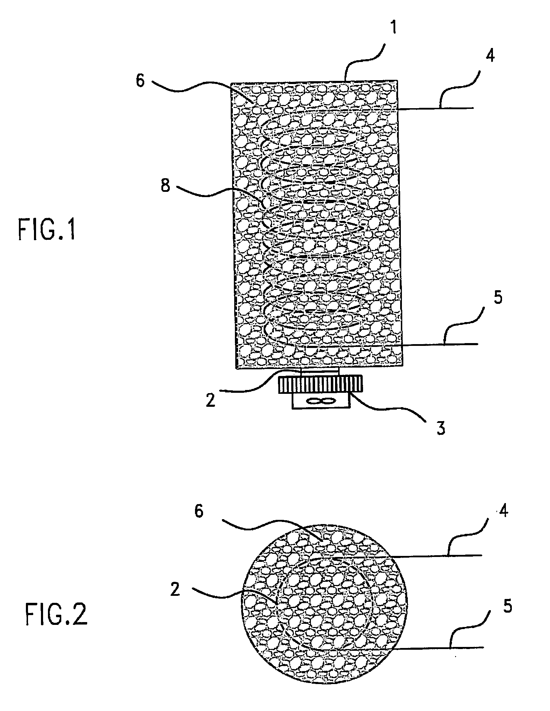

Fig. 1 zeigt eine erfindungsgemäße Vorrichtung zum Kühlen von Lebensmitteln mit einem zylindrischen Behältnis 1, das eine eingebrachte Leitung in Form einer Rohrwendel 8 aufweist, die durch eine zu kühlende Flüssigkeit auf Wasserbasis von einem Eintritt 5 zu einem Austritt 4 durchlaufen wird. Die zu kühlende Flüssigkeit kann entweder das zu kühlende Getränk, bevorzugt Wasser mit oder ohne Gasbeimischung (Kohlendioxyd und/oder Sauerstoff) sein, das aus einer Wasserquelle, bevorzugt die zentrale, örtliche Wasserversorgung stammt. Die Flüssigkeit kann jedoch auch ein Kühlmittel sein, das jedoch bevorzugt ebenfalls Wasser ist und aus der zentralen Wasserversorgung stammt, jedoch zum Kühlen von Lebensmitteln oder Getränken an anderer Stelle dient.

Das Behältnis 1 wird von einem Kältespeicher 6 ausgefüllt, der ein Verbundmaterial aus expandiertem Graphit sowie einem Material enthält, das einen Phasenwechsel bei oder oberhalb von 273 K durchläuft, wobei der Phasenwechsel bevorzugt wenige °C (bis zu 10° C, bevorzugt 3° bis 5°C) oberhalb des Gefrierpunkts von Wasser liegt.

Als Phasenwechselmaterial eignen sich bevorzugt für ihre Phasenwechseleigenschaf-ten bekannte Salze sowie Paraffine. Im dargestellten Ausführungsbeispiel liegt der Graphit als schüttfähiges Granulat vor und ist mit dem Phasenwechselmaterial getränkt. Dem Kältespeicher 6 wird durch eine geeignete Einrichtung die aus der Flüssigkeit in der Rohrwendel 8 aufgenommene Wärme wieder entzogen. Die Einrichtung ist im dargestellten Ausführungsbeispiel ein Peltier-Element 2, das mit seiner kalten Seite in intimen Kontakt mit dem Kältespeicher 6 steht. Die heiße Seite des Peltier-Elements 2 ist mit einer Vorrichtung 3 zum Abtransport der Warme versehen. Die Vorrichtung 3 kann jede geeignete Vorrichtung sein, und ist insbesondere ein Gebläse, wie es üblicherweise bei Peltier-Elementen eingesetzt wird. Darüber hinaus können Vorkehrungen getroffen werden, das Peltier-Element 2 umzupolen, so dass gegebenenfalls die durch die Leitung 8 strömende Flüssigkeit zur Desinfektion erhitzt werden kann.

Zur Verbesserung der Wärmeleitung besteht diejenige Stelle des Behältnisses 1, an der das Peltier-Element 2 angebracht ist, aus einem gut wärmeleitenden Material, insbesondere aus einem metallischen Werkstoff.

Schließlich können mehrere Peltier-Elemente vorgesehen sein.

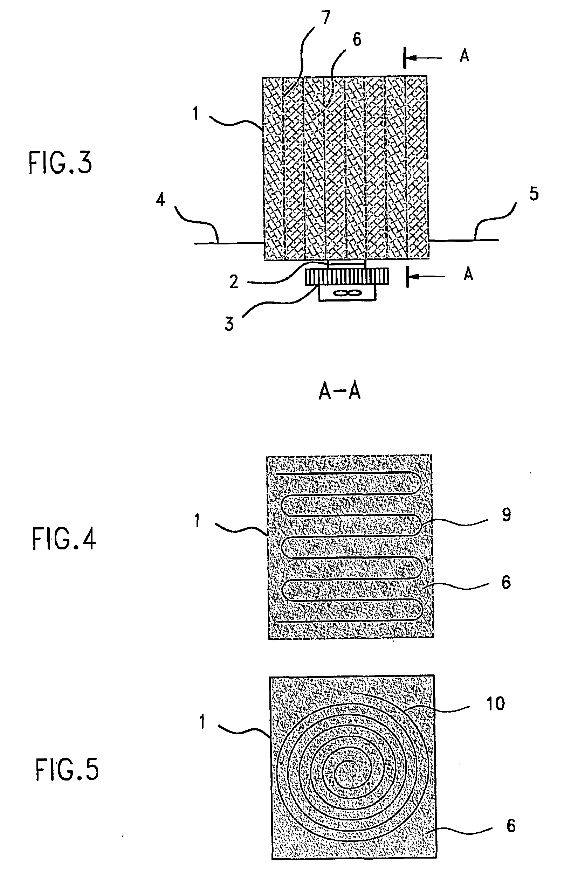

In den Fig. 3 bis 5 sind weitere Ausführungsbeispiele der erfindungsgemäßen Vorrichtung zum Kühlen von Lebensmitteln gezeigt, die sich nur durch die nachfolgend beschriebenen Einzelheiten vom Ausführungsbeispiel gemäß den Fig. 1 und 2 unterscheiden. Auch die Vorrichtung gemäß Fig. 3 enthält ein Behältnis 1, das in diesem Ausführungsbeispiel jedoch rechteckig ist, jedoch ebenso zylindrisch sein kann, wie im ersten Ausführungsbeispiel. Im Behältnis 1 ist ein Kältespeicher 6 untergebracht, der diesmal aus plattenförmigem, expandiertem Graphit besteht, der mit dem gleichen Phasenwechselmaterial getränkt wurde, das bereits anhand Fig. 1 beschrieben wurde. Der Kältespeicher zeigt einen Schichtaufbau, wobei sich Platten des Graphitmaterials mit einer schichtartigen Anordnung 7 geeignet geformter und gelegter Leitungen abwechseln, die jedoch wiederum mit dem Wasseraustritt 4 und dem Wassereintritt 5 aus dem Behälter 1 ragen. Die schichtartige Anordnung 7 kann beispielsweise eine mäanderförmige Leitungsgeometrie 9 der Fig. 4 bzw. eine spiralförmige Leitungsgeometrie 10 der Fig. 5 enthalten. Jede Leitungslage 7 steht mit Zu- und Ablauf in nicht gezeichneter Weise mit den benachbarten Leitungslagen in Verbindung, wobei die erste und die letzte Leitungslage mit dem Wasseraustritt 4 bzw. dem Wassereintritt 5 verbunden sind.

Die Leitungslagen können entweder als Rohre gelegt werden oder in Form von profilierten Platten ausgebildet sein, wobei bevorzugt zwei Platten spiegelbildlich mit entsprechenden Einprägungen in der Größe des halben Querschnitts der Leitung versehen werden, und die Platten anschließend aufeinander gelegt und aneinander befestigt werden, so dass sich die Einprägungen zu durchgehenden und umfangsseitig geschlossenen Kanälen ergänzen. Sowohl die Rohre als auch die Profilplatten bestehen aus gut wärmeleitendem Material, beispielsweise Metall. Die Leitungen 8, 9 oder 10 haben bevorzugt einen Durchmesser zwischen 3 und 11 mm, insbesondere 4-10 mm, da sich bei diesem Durchmesser in Verbindung mit einem Wasserdruck, wie er im Durchschnitt von einem Wasserleitungsnetz geliefert wird (1,5 - 4,5 bar), der gegebenenfalls durch eine Pumpe oder einen Druckminderer auf einen konstanten, nur unwesentlich schwankenden Druck (± 0,5 bar) eingestellt werden kann, eine starke, einer Verkeimung entgegenwirkende Strömung ausbildet.

Die schichtartige Anordnung gemäß den Fig. 3 bis 5 wird bevorzugt durch Verpressen der Leitungsschichten mit den Graphitplatten hergestellt, was zu einem besonders innigen, wärmeübertragenden Kontakt zwischen den Schichten führt.

Auch bei diesem Ausführungsbeispiel enthält die Einrichtung zum "Aufladen" des Kältespeichers 6 bevorzugt das bereits beschriebene Peltier-Element 2, wobei das Pel-tier-Element 2 so angeordnet ist, dass die Flächenormale der Graphitplatten parallel zur Fläche des Peltier-Elements 2 ausgerichtet ist.

Die Ausführungsbeispiele nach den Fig. 1 bis 5 sind bevorzugt in Form einer Kältebatterie, d.h. einer handhabbaren Einheit ausgebildet. In dieser Form kann die erfindungsgemäße Vorrichtung überall dort, gegebenenfalls auch nachträglich, eingebaut werden, wo sie erforderlich ist. Notwendig ist lediglich, dass Vorkehrungen getroffen werden, um den Wasserein- und -austritt 4, 5 an eine Wasserquelle, beispielsweise die örtliche Trinkwasserversorgung, anzuschließen. Gegebenenfalls ist es jedoch auch möglich, die erfindungsgemäße Vorrichtung als Kältebatterie ohne das Peltier-Eiement auszubilden und eine andere Technik zum "Aufladen" des Kältespeichers zu verwenden.

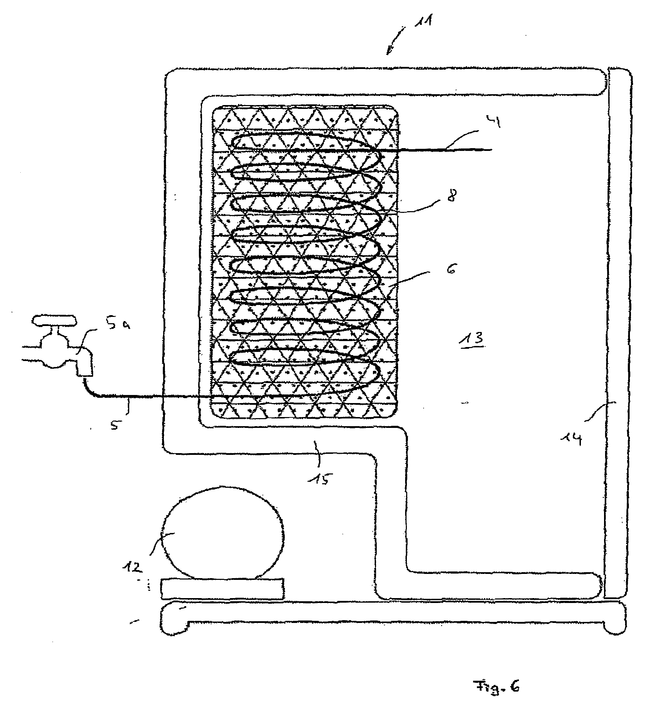

Dies kann beispielsweise das Kühlaggregat eines herkömmlichen Kühlschranks, beispielsweise eines Absorber- oder eines Kompressorkühlschranks sein. Dieser Fall ist in Fig. 6 dargestellt. Fig. 6 zeigt einen herkömmlichen Kühlschrank 11, der mit seinem eigenen Kühlaggregat 12 versehen ist. In den Kühlschrank 11 ist ein erfindungsgemäßer Kältespeicher 6 integriert, der als Kältebatterie ausgebildet ist. Der Kältespeicher 6 kann, wie Fig. 6 zeigt, irgendwo im Innenraum 13 des Kühlschranks 11, ggfs. auch nachträglich, untergebracht werden. Im dargestellten Ausführungsbeispiel ist er im hinteren, einer Tür 14 gegenüberliegenden Bereich untergebracht. Der Kältespeicher'6 kann jedoch auch irgendwo in eine Wand 15 (einschl. Boden und obere Abdeckung oder Tür 14) bzw. in einen Zwischenboden oder dgl. untergebracht werden.

Der Kältespeicher 6 ist mit der Leitung 8 versehen, durch die eine Flüssigkeit auf Wasserbasis geführt wird. Der Wassereintritt 5 ist an ein Trinkwassernetz angeschlossen, was bevorzugt lösbar über ein Ventil 5a, z.B. einen herkömmlichen Wasserhahn, erfolgt. Der Wasseraustritt 4 kann zu einer nicht gezeichneten Zapfstelle geführt werden.

Die Funktion des Peltier-Elements erfüllt hier jedoch das Kühlaggregat 12 des Kühlschranks 11. Der Kältespeicher 6 kann, wie gezeigt, nur in einem Teil des Innenraums 13 vorgesehen sein, kann jedoch auch den gesamten Innenraum 13 ausfüllen. Letztere Version führt zu einer besonders kostengünstig herstellbaren Vorrichtung zum Kühlen von Getränken, wobei die Leitung durch den gesamten, mit Kältespeicher 6 ausgefüllten Innenraum geführt wird.

## Patentansprüche

1. Vorrichtung zum Kühlen von Lebensmitteln, insbesondere Getränken auf Wasserbasis, mit einem ein Phasenwechselmaterial enthaltenden Kältespeicher (6), wobei durch den Kältespeicher (6) eine Leitung (8, 9, 10) für eine zu kühlende Flüssigkeit auf Wasserbasis hindurchgeführt ist, sowie mit einer Einrichtung zum Abführen der Wärme aus dem Kältespeicher, **dadurch gekennzeichnet, dass** der Kältespeicher (6) expandierten Graph it und ein Phasenwechselmaterial enthält, das einen fest-flüssig Phasenwechsel bei oder oberhalb von 273 K durchläuft.

2. Vorrichtung nach Anspruch 1, **dadurch gekennzeichnet, dass** der Kältespeicher (6) geschüttetes, mit dem Phasenwechselmaterial getränktes Graphit-Granulat enthält.

3. Vorrichtung nach Anspruch 1 oder 2, **dadurch gekennzeichnet, dass** ein Phasenwechselmaterial eingesetzt wird, dessen Phasenwechseltemperatur bei maximal 10°C liegt.

4. Vorrichtung nach Anspruch 1 oder 2, **dadurch gekennzeichnet, dass** ein Phasenwechselmaterial eingesetzt wird, dessen Phasenwechseltemperatur über 0°C bis maximal 10°C liegt.

5. Vorrichtung nach einem der Ansprüche 1 bis 4, **dadurch gekennzeichnet, dass** die Einrichtung zum Abführen der Wärme ein Peltier-Element (2) enthält,

6. Vorrichtung nach Anspruch 5, **dadurch gekennzeichnet, dass** die durch die Leitung (8, 9, 10) strömende Flüssigkeit zur Desinfektion durch Umpolung der Spannungsversorgung des Peltier-Elements (2) erhitzbar ist.

7. Vorrichtung nach einem der Ansprüche 1 bis 4, **dadurch gekennzeichnet, dass** die Einrichtung zum Abführen der Wärme eine Absorber- und/oder Verdampfer-Kühlschrankaggregat (12) enthält.

8. Vorrichtung nach einem der Ansprüche 1 bis 7, **gekennzeichnet durch** eine Ausgestaltung als Kältebatterie, die wenigstens den Kältespeicher (6) als handhabbare Einheit enthält.

9. Vorrichtung nach Anspruch 8, **dadurch gekennzeichnet, dass** die Einheit die Einrichtung zum Abführen der Wärme enthält.

10. Vorrichtung nach einem der Ansprüche 1 bis 9, **dadurch gekennzeichnet, dass** die Leitung (8, 9, 10) an eine Getränkequelle angeschlossen ist und zu einer Zapfeinrichtung führt.

11. Vorrichtung nach einem der Ansprüche 1 bis 9, **dadurch gekennzeichnet, dass** die Leitung (8, 9, 10) an eine zentrale Wasserversorgung anschließbar ist.

12. Vorrichtung nach einem der Ansprüche 1 bis 11, **gekennzeichnet durch** eine Ausgestaltung als Kühlbehälter (11) mit einem Gehäuse mit isolierter Wandung (15), wobei der Kältespeicher (6) und die Leitung (8, 9, 10) in die Wandung (15), und/oder einen Innenraum (13) des Kühlbehälters (11) integriert ist.

## Claims

1. An apparatus for cooling foods, in particular water-based drinks, having a cold accumulator comprising a phase change material (6), with a line (8, 9, 10) for a water-based liquid to be cooled being passed through the cold accumulator, and also having a unit for removing heat from the cold accumulator, **characterized in that** the cold accumulator (6) contains expanded graphite and a phase change material which passes through a solid-liquid phase change at or above 273 K.

2. The apparatus as claimed in claim 1, **characterized in that** the cold accumulator (6) contains a loose bed of graphite granules impregnated with the phase change material.

3. The apparatus as claimed in claim 1 or 2, **characterized in that** use is made of a phase change material whose phase change temperature is not above 10°C.

4. The apparatus as claimed in claim 1 or 2, **characterized in that** use is made of a phase change material whose phase change temperature is above 0°C to not above 10°C.

5. The apparatus as claimed in one of claims 1 to 4, **characterized in that** the system for removing heat contains a Peltier element (2).

6. The apparatus as claimed in claim 5, **characterized in that** the liquid flowing through the line (8, 9, 10) can be heated for disinfection by reversing the polarity of the voltage supply of the Peltier element (2).

7. The apparatus as claimed in one of claims 1 to 4, **characterized in that** the system for removing heat contains an absorber and/or evaporator refrigerator unit (12).

8. The apparatus as claimed in one of claims 1 to 7, **characterized by** a design as cold battery which contains at least the cold accumulator (6) as a handleable unit.

9. The apparatus as claimed in claim 8, **characterized in that** the unit contains the unit for removing heat.

10. The apparatus as claimed in one of claims 1 to 9, **characterized in that** the line (8, 9, 10) is connected to a drink source and leads to a dispense system.

11. The apparatus as claimed in one of claims 1 to 9, **characterized in that** the line (8, 9, 10) can be connected to a central water supply.

12. The apparatus as claimed in one of claims 1 to 11, **characterized by** a design as cooling container (11) having a housing having an insulated wall (15), with the cold accumulator (6) and the line (8, 9,10) being integrated into the wall (15) and/or an interior (13) of the cooling container (11).

## Revendications

1. Dispositif de refroidissement de produits alimentaires en particulier de boissons à base d'eau comportant un accumulateur de frigories (6) renfermant un matériau à changement de phase, une conduite (8, 9, 10) pour un liquide à base d'eau devant être refroidi passant au travers de l'accumulateur de frigories (6), ainsi qu'un dispositif d'évacuation de la chaleur de l'accumulateur de frigories,
**caractérisé en ce que**
l'accumulateur de frigories (6) renferme du graphite expansé et un matériau à changement de phase qui met en oeuvre un changement de phase solide-liquide à une température supérieure ou égale à 273 K.

2. Dispositif selon la revendication 1,
**caractérisé en ce que**
l'accumulateur de frigories (6) renferme des granulats de graphite agités, imprégnés de matériau à changement de phase.

3. Dispositif selon la revendication 1 ou 2,
**caractérisé en ce que**
l'on met en oeuvre un matériau à changement de phase dont la température de changement de phase est au maximum égale à 10°C.

4. Dispositif selon la revendication 1 ou 2,
**caractérisé en ce que**
l'on met en oeuvre un matériau à changement de phase dont la température de changement de phase est comprise entre 0°C et 10°C.

5. Disposition selon l'une des revendications 1 à 4,
**caractérisé en ce que**
le dispositif d'évacuation de la chaleur renferme un élément Peltier (2).

6. Dispositif selon la revendication 5,
**caractérisé en ce que**
le liquide s'écoulant dans la conduite (8, 9, 10) peut être chauffé en vue de sa désinfection suite à l'inversion de l'alimentation en tension de l'élément Peltier (2).

7. Dispositif selon l'une des revendications 1 à 4,
**caractérisé en ce que**
le dispositif d'évacuation de la chaleur renferme un ensemble réfrigérateur à absorption et/ou à évaporation (12).

8. Dispositif selon l'une des revendications 1 à 7,
**caractérisé en ce qu'**
il est réalisé sous la forme d'une batterie frigorifique qui renferme au moins l'accumulateur de frigories (6) en tant qu'unité portative.

9. Dispositif selon la revendication 8,
**caractérisé en ce que**
l'unité renferme le dispositif d'évacuation de la chaleur.

10. Dispositif selon l'une des revendications 1 à 9,
**caractérisé en ce que**
la conduite (8, 9, 10) est reliée à une source de boisson et conduit à un dispositif distributeur.

11. Dispositif selon l'une des revendications 1 à 9,
**caractérisé en ce que**
la conduite (8, 9, 10) peut être reliée à une alimentation centrale en eau.

12. Dispositif selon l'une des revendications 1 à 11,
**caractérisé en ce qu'**
il est réalisé sous la forme d'un compartiment frigorifique (11) comportant un boîtier avec des parois (15) isolées, l'accumulateur de frigories (6) et la conduite (8, 9, 10) étant intégrés dans les parois (15) et/ou dans une chambre intérieure (13) du compartiment frigorifique (11).
